# EUROPEAN PATENT SPECIFICATION

(11) **EP 1 767 294 B1**
(45) Date of publication and mention of the grant of the patent: **21.05.2008**
(21) Application number: 05020530.1
(22) Date of filing: 21.09.2005
(51) Int. Cl.: B23B 29/02, B23B 41/12

(54) **Portable boring bar with continuous motion of the tool on the main bar through differential motion device**
Tragbare Bohrstange mit einem stetig bewegbaren und mit einem differential Antriebsvorrichtung angetriebenen Werkzeug
Barre d'alésage transportable avec outil déplaçable en permanence à l'aide d'un dispositif différentiel d'actionnement

(43) Date of publication of application: 28.03.2007
(73) Proprietor: de Angelis, Giuseppe, 16142 Genova (IT)
(72) Inventor: de Angelis, Giuseppe, 16142 Genova (IT)

(56) References cited:
- US-A- 4 652 186
- US-A- 5 030 041
- US-B1- 6 447 220

## Description

With this invention we aim at solving the problem of precision reaming of calibrated holes by means of a modern, compact, multi-purpose, and single-motored instrument. This instrument can be used in numerous activities.

Its being portable is what makes this instrument ideal for reaming on the spot: for instance in couplings for shafts and flywheels, in thermal power plants, oil refineries, shipyards, paper mills, chemical factories and steel mills.

The easiness with which it can be handled and the possibility of inserting it on the spindles of tooling machines allow to the workshops and mechanical assembly lines to have an extremely precise and low cost reaming instrument.

The precision reaming of calibrated holes is currently executed with the help of different types of machines. Substantially, two different movements have to be combined: a rotatory movement and a translation movement.

In currently existing instruments, these two movements are independent from each other, and are controlled by one or more different motors. Besides this, frequently, the translation movement is not continuous, but incremental with a cam-system.

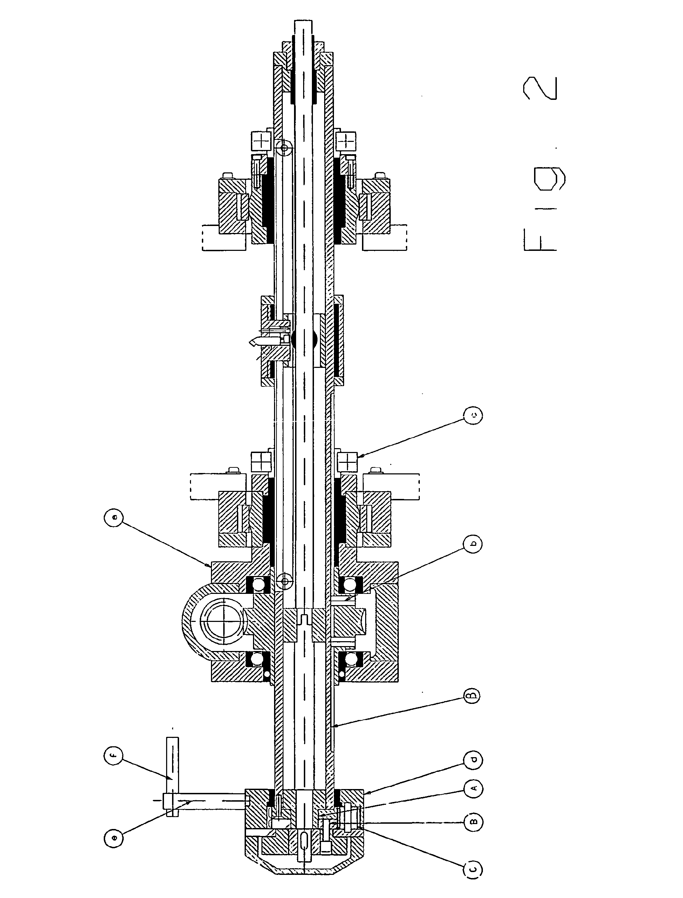

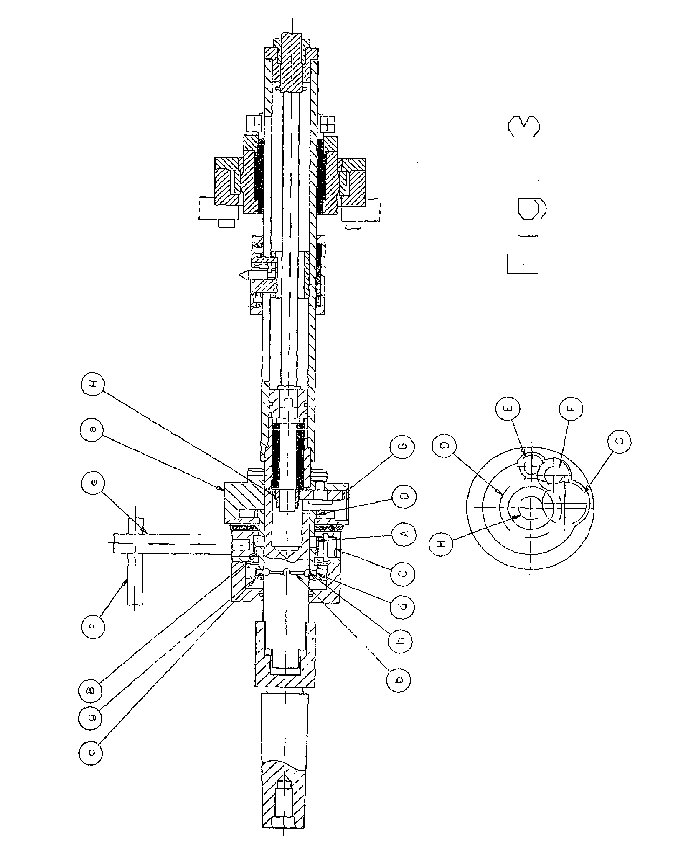

The instrument that seems to be more similar to the invention here presented is the patent US 4652186 A, a machine equipped with a solid bar and a lead screw laying in a slot along the bar and moved by a belt drive. The machine tool according to the present invention makes reaming possible thanks to a compact, multi-purpose, single-motored instrument with a tubular bar and a lead screw lying coaxially within the bar and moved by a differential mechanism. In addition to this, unlike already existing bars, this instrument can be used on tooling machines **(see** **Fig.3****)** and can be made according to a suitable length with a bar penetrating the motor **(see** **Fig. 2****).**

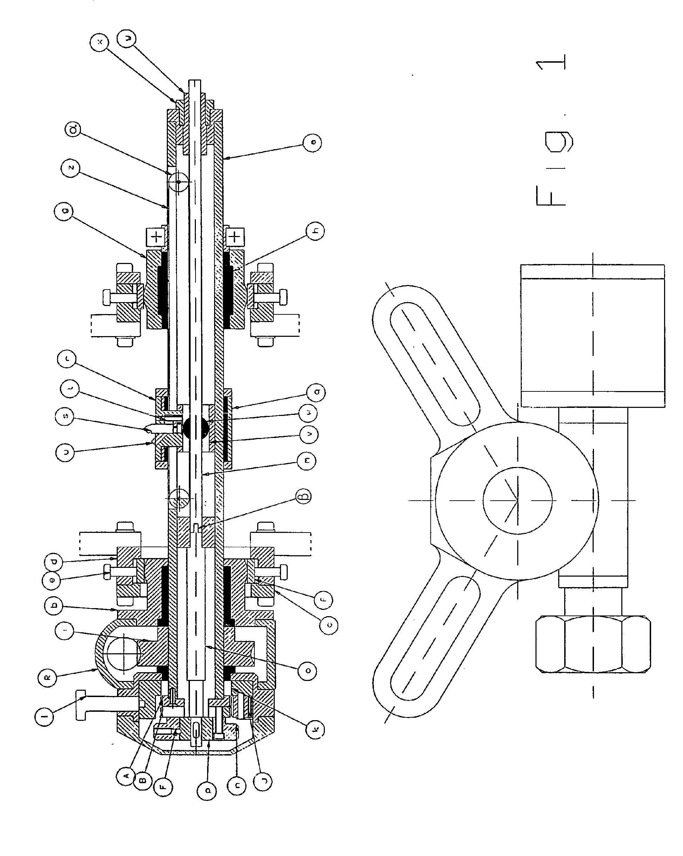

As can be seen in Fig. 1, there is a boring bar with two balancing supports.

The boring bar is machined from a tubular bar of quality steel **(a)** (or another suitable material) ground with a very close tolerance. A driving slot for the toolholder shuttle **(q)** is made on the tubular bar **(a).**

The first support is composed of: a bushing with an external convex part **(b),** a tightening flange **(c),** a steady rest **(d)** with screws for adjustment **(e)** which contains a spherical ring **(f)** for balancing the convex part **(b)** of the bushing , and finally mounting brackets which are fastened laterally on the circumference of the steady rest **(d).**

The second support, like the first support, has a balancing function and is composed of a main body **(g)** with an external convex part containing in its interior a bronze bushing **(h)** which is made to roll by the bar. The bronze bushing **(h)** slides on the bar with great precision (precise passing, about 0,01 mm). The bronze bushing **(h),** in turn, rolls into the main body **(g)** with extreme precision.

The toolholder shuttle **(q)** is an external sleeve which slides precisely on the bar with a 0,01 mm tolerance. An opening is milled on this toolholder shuttle **(q).** The width of this opening is identical to the driving slot of the tubular bar **(a).** The toolholder key **(r)** is placed in the milled opening. The toolholder key **(r)** contains the tool **(s),** which can be moved with micrometer precision through the screw **(t)** and blocked in position by the screw **(u).** The lower part of the toolholder key **(r)** is fixed on the internal shuttle **(v)** in which the bronze lead nut **(w)** is lodged, with lead screw **(m)** passing in it.

An harmonic steel band **(z)** has been inserted in order to avoid that chips or other machining materials may penetrate into the tubular bar **(a)** and damage the lead screw - lead nut device. The ends of the band **(z)** are fastened to the toolholder shuttle **(q).** Two rolls **(α)** laid at the ends of the driving slot convey the band **(z),** which passes between the lead screw **(m)** and the tool holder key **(r).**

The motorization of the bar can be executed with any kind of motor, on condition that the regulation of the rotations per minute can be modulated. The motor is connected to a worm reduction unit **(R).** The motor operates the worm-gear, which transmits the movement to the helical gear **(i),** which is keyed and fastened to the tubular bar **(a)** with extreme precision (0:0). Therefore, it is possible to vary and modulate the rotation speed according to what kind of machining has to be performed.

The translation of the tool is continuous: at every rotation of the bar the tool advances by 0,05 mm or any other distance according to what the user requires. The motion device is composed of two gears, **(A)** and **(B),** having the same pitch diameter as each other, but having a number of teeth which differs by one unit. Both **(A)** and **(B)** mesh on a planetary gear **(j),** whose pin of rotation is placed in the contrasting box **(k).** The contrasting box **(k)** turns as many times as the bar when the motion device is off. In such case, the planetary gear **(j)** is idle. Whenever one wants to turn the motion on, the pawl **(l)** is made to enter into a hole which is circumferentially placed on the external part of the contrasting box **(k).** The contrasting box **(k)** is blocked, and the planetary gear **(j),** from the moment in which it is engaged, rotates around itself receiving the motion from the gear **(A)** and making the gear **(B)** rotate with the same number of rotations as the bar minus one tooth.

The differential motion is transferred on to the lead screw **(m),** which is made to rotate. Such rotation is converted into the linear translation movement of the toolholder shuttle **(q).**

In case of a bump of the toolholder shuttle **(q),** a breaking or a blocking of the tool **(s),** in order to avoid damage to the motion device, a safety friction drive **(F)** has been inserted. This security friction drive works following the principle that is going to be illustrated. The gear **(B)** is, by means of screws, integral to the ring **(n),** which has got four radial holes; in each hole there is a bearing ball, an harmonic steel spring and an adjustment screw. On the shaft **(o),** then connected to the lead screw **(m),** a ring **(p)** is keyed.

Such ring **(p)** has a rolling track and four lodgings for the bearing balls. These lodges are diametrically opposed to each other.

In normal conditions, the motion is transmitted without any slipping of the friction drive. Whenever there is a hindrance, the calibration of the friction cannot sustain the shearing strength and the bearing balls move backward and roll on the track of the ring **(p),** thus interrupting the transmission of the motion to the shaft **(o)** and to the lead screw **(m).**

In order to execute a fast movement of the toolholder shuttle **(q),** the system is equipped with a manual device for rapid movement. Such device is mounted on the extremity opposite the motorization. When the hexagonal bolt **(x)** is unscrewed, the bronze bushing **(y)** moves backward and makes the lead screw **(m)** translate: the lead screw **(m)** becomes unhooked from the fork coupling **(β)** composed of the extremity of the shaft **(o)** and the lead screw **(m).** Once the lead screw **(m)** is unhooked, a spanner is inserted on it at the extremity opposite the motorization. In this way a rapid positioning of the toolholder shuttle **(q)** at any point of the tubular bar **(a)** is possible.

**Fig.2** represents a portable boring bar for machining on the spot with the bar going through the two supports, and with a motion device working independently.

In this case, referring to FIG. 2, the boring bar has a contrasting slot **(β)** along the main bar with variable length. The first support **(a),** which contains the motorization, is completely passing and the bar is free to slide. For the rotation, the bar is driven by the spline **(b)** that slides through the contrasting slot **(β)**. The standstill position of the bar with reference to the support **(a)** is obtained by means of the tie (c), which is fastened to the bar through a pliers system.

The device for the motion of the lead screw is mounted at the top of the bar. Also in this case, if the gear box **(d)** is free to rotate, there is no transmission of movement. On the contrary, if the contrasting bar **(e)** and **(f),** is mounted and fixed on the gear box **(d),** then the motor gear **(A)** transmits the movement to the gear **(B)** by means of the planetary gear **(C).**

In turn, the gear **(B),** through the friction drive set, transmits the movement to the lead screw, following what has previously been explained.

To be able to apply a precision low cost reaming system, which does not vary from the solution that has been described in Fig. 1, here follows the description of the device pictured in Fig.3.

The boring bar can be mounted on the spindle of a tooling machine, e.g. a pillar drill, a boring machine, or any other operating machine. In this case the motorization of the base machine is used and the bar is engaged by means of a Morse-ISO chuck or something else.

The bar presented in Fig. 1 has its own motorization: in that case the rotation movement of the lead screw **(m -** **Fig.1****)** can happen thanks to the friction drive of the conductor gear **(A -** **Fig.1****).**

In the case represented in Fig. 3 it is necessary to transfer the rotation movement to the lead screw by means of a movement transfer box **(a -** **Fig.3****).** In the same manner as the preceding case, there is no transmission of movement to the lead screw, without the contrasting pawl **(1 -** **Fig.1****).**

Referring to FIG.3, whenever the contrasting pawl is inserted or replaced by the contrasting bar, **(e)** and **(f),** the gear **(B)** integral to the friction drive set becomes a motor gear and, by means of the planetary gear **(C),** transmits the movement to the gear **(A).** The gear **(A),** in turn, is coaxial with the gear **(D)** and integral with it, with a cam coupling. The gear **(D)** meshes with the couple of gears **(E),** which, in turn, meshes with the couple of gears **(F),** which, by means of the gear **(G),** which keeps the rotation direction unaltered, meshes with the gear **(H),** keyed on the lead screw.

Also the instrument in Fig. 3 has been equipped with a safety friction drive. The rolling track **(b)** and the lodging of the balls are located in the bar at the bottom of the attachment to the tool machine. The ring **(c)** contains the grub screws **(d),** the springs **(g)** and the balls **(h).** The ring **(c)** is integral to the motor gear **(B)** through a cam coupling. If the balls are in their niches, the advancement movement is transmitted. If any hindrance occurs, the springs are pressed by the balls coming out of their lodgings onto the track, thus nullifying the motor effect of either the pawl or the contrasting bar.

## Claims

1. **CLAIM 1:** A portable boring bar (see Fig.1) for on site boring operation, equipped with a bar **(a),** a lead screw **(m)** for the movement of a toolholder shuttle **(q)** and one motor that allows both motions of cutting and translation necessary to bore **characterized in that** the bar **(a)** is tubular and is fitted with the lead screw **(m),** positioned concentrically within the tubular bar **(a)** and moving through its rotation, the toolholder shuttle **(q);** and **in that** the continuous movement of the tool **(s)** on the tubular bar **(a)** occurs by means of a differential motion device composed of two gears **(A)** and **(B),** having the same pitch diameter as each other and having a number of teeth differing by one unit and meshing with each other by means of a planetary gear **(j)** contained in a contrasting box **(k),** said contrasting box **(k)** being provided with means allowing to turn the feed movement of the boring bar on and off.

2. **CLAIM 2:** The portable boring bar AS CLAIMED IN CLAIM 1 (see fig.1) **characterized by** a motorized device with an endless screw-helical gear **(i)** with a modulating, reversible motor electric, pneumatic or hydraulic.

3. **CLAIM 3:** The portable boring bar AS CLAIMED IN CLAIM 1 (see fig.2) **characterized by** a tubular bar, supported by two supports having an independent feed device which is mounted on the boring bar from the head with contrast of the gear box **(d)** containing the planetary gear by means of a contrasting bar **(e)** and **(f).**

4. **CLAIM 4:** The portable boring bar AS CLAIMED IN CLAIM 1 (see Fig.3) without any motorization **characterized by** the presence of a Morse-ISO chuck, or another type of chuck, which can be used for the connection of a tooling machine (pillar drill, cotter drill, universal miller, portal milling machine, boring machine, jig borer, or other tool machines) with the spindle.

5. **CLAIM 5:** The portable boring bar AS CLAIMED IN CLAIM 4 (see fig. 3), **characterized by** a device equipped with a cascade of gears for the transmission of the translation movement.

6. **CLAIM 6:** The portable boring bar AS CLAIMED IN CLAIM 5 (see fig.3), **characterized by** having a transfer box **(a)** for the transfer of the differential movement from the outside of the bar to the inside of the lead screw. The contrasting box is equipped with a contrasting bar **(e)** and **(f).** If the contrasting bar **(e)** and **(f)** is inserted, the gear **(B)** which is integrated to the friction drive set becomes a motor gear, and, through the planetary gear **(C),** transmits the movement to the gear **(A).** With the help of a cam coupling, the gear **(A)** is connected to the gear **(D),** which in turn meshes with a gear chain in order to transfer the movement to the lead screw at the centre of the bar by means of a gear keeping the rotation direction unaltered.

7. **CLAIM 7:** The portable boring bar AS CLAIMED IN CLAIM 1 (see fig.1), **characterized by** a safety friction **(p)** and **(n),** laid on the upper side of the contrasting box **(k)** which is activated in case of crash or end course.

8. **CLAIM 8:** The portable boring bar AS CLAIMED IN ONE OF THE CLAIMS 1,9,5,6 (see fig.1) **characterized by** an harmonic steel tape **(z),** or another suitable material, for the protection of the inside movement.

9. **CLAIM 9:** The portable boring bar AS CLAIMED IN ONE OF THE CLAIMS 1,4,5,6 (see fig.1), **characterized by** a toolholder key **(r)** with the tool **(s)** being adjustable and blockable in a position, with the possibility of replacing the tool **(s).**

## Patentansprüche

1. **PATENTANSPRUCH 1:** Ein tragbarer Bohrstab (s. Abb. 1) für Ausreibarbeiten vor Ort, ausgestattet mit einem Stab **(a),** einer Schraubmutter **(m)** für die Bewegung einer werkzeugtragenden Fähre **(q)** und einem Motor, der die beiden für die Bohrung notwendigen Schneid- und Überführungsbewegungen abstimmt, **gekennzeichnet durch** einen röhrenförmigen Stab **(a),** ausgestattet mit einer Schraubmutter **(m),** die sich konzentrisch im Stab befindet, die werkzeugtragende Fähre **(q);** diese ständige Bewegung des Geräts **(s)** über dem röhrenförmigen Stab **(a)** ergibt sich **durch** einen ausgleichenden Bewegungsmechanismus, der aus zwei Getrieben **(A)** und **(B)** besteht: jedes dieser Getriebe hat denselben primitiven Durchmesser und unterscheidet sich vom anderen nur um einen Zahn; sie greifen ineinander mit einem Planetgetriebe, der sich in einer sog. Kontrastschachtel **(k)** befindet.

2. **PATENTANSPRUCH 2:** Ein tragbarer Bohrstab WIE IN ANSPRUCH 1 (s. Abb. 1) **gekennzeichnet durch** eine Motorisierung am einem Ende mit einem endlosen, spiralförmigen Schraubgetriebe **(i),** einem modulierbaren umkehrbaren elektrischen, pneumatischen oder hydraulischen Motor.

3. **PATENTANSPRUCH 3:** Ein tragbarer Bohrstab WIE IN ANSPRUCH 1 (s. Abb. 2) **gekennzeichnet durch** einen röhrenförmigen Stab, der von zwei Trägern gestützt wird und über eine selbständige Beförderungsvorrichtung verfügt, die auf dem Kopf des Bohrstabs montiert ist, im Gegensatz zur Getriebeschachtel **(d),** in der sich das Planetgetriebe befindet, das **durch** ein Kontraststab **(e)** und **(f)** betätigt wird.

4. **PATENTANSPRUCH 4:** Ein tragbarer Bohrstab WIE IN ANSPRUCH 1 (s. Abb. 3) ohne Motorisierung, **gekennzeichnet durch** die Anwesenheit eines Morse-ISO Anschlusses oder anderer Anschluss-Typ, zur Verbindung eines Werkzeuggeräts (Bohrmaschine, Fräsmaschine, Reibahle, Absteckmaschine, usw.).

5. PATENTANSPRUCH **5:** Ein tragbarer Bohrstab WIE IN ANSPRUCH 4 (s. Abb. 3) **gekennzeichnet durch** eine Vorrichtung mit einer Getriebkaskade für die Übertragung der Überführungsbewegung.

6. **PATENTANSPRUCH 6:** Ein tragbarer Bohrstab WIE IN ANSPRUCH 5 (s. Abb. 3) **gekennzeichnet durch** eine Übertragungsschachtel **(a)** zur Übertragung der Ausgleichsbewegung der Schraubmutter von aussen nach innen. Die Kontrastschachtel verfügt über einen Kontraststab **(e)** und **(f).** Wenn der Kontraststab **(e)** und **(f)** eingesteckt ist, wird das Getriebe **(B)** im Kupplungsgerät ein Motorgetriebe und, mittels des Planetgetriebs (C) überträgt es die Bewegung auf das Getriebe **(A).** Mit Hilfe einer Turmschaltung verbindet sich das Getriebe **(A)** mit dem Getriebe **(D),** das seinerseits mit einer Getriebkaskade die Bewegung zur Schraubmutter (die sich in der Mitte des Stabs befindet) überträgt, mit Hilfe eines Getriebes, das die Umdrehungsrichtung unverändert behält.

7. **PATENTANSPRUCH 7:** Ein tragbarer Bohrstab WIE IN ANSPRUCH 1(s. Abb. 1) **gekennzeichnet durch** eine Sicherheitskupplung **(p)** und (n), die sich oberhalb der Kontrastschachtel **(k)** befindet und bei Zusammenstoss oder Endlauf einspringt.

8. **PATENTANSPRUCH 8:** Ein tragbarer Bohrstab WIE IN ANSPRÜCHE 1, 4, 5, 6 (s. Abb. 1) **gekennzeichnet durch** ein harmonisches Band **(z)** aus Stahl oder ähnlichem Material, zum Schutz der Innenbewegung.

9. **PATENTANSPRUCH 9:** Ein tragbarer Bohrstab WIE IN ANSPRÜCHE 1, 4, 5, 6 (s. Abb. 1) **gekennzeichnet durch** eine Sperrung **(r)** mit einem regelbaren und in einer bestimmten Stellung blockierbaren Werkzeug **(s),** mit der Möglichkeit die aufgesetzten Teile **(s)** auszuwechseln.

## Revendications

1. **RESERVE 1:** Une barre alesante portable (voir fig. 1) pour des opérations d'alesage in situ, pourvue d'une barre **(a),** une vis de base **(m)** pour le mouvement d'une navette porte-outils **(q)** et un moteur qui règle les deux mouvements, celui de coupe et celui de translation, nécessaires au déplacement, **caractérisé par** une barre **(a)** tubulaire dotée de la vis de base **(m)** placée d'une manière concentrique à l'intérieur de la barre, la navette porte-outils **(q)** et ce mouvement continu de l'outil **(s)** sur une barre tubulaire (**a**) se réalise grâce à un mécanisme à mouvement différentiel composé de deux engrenages **(A)** et **(B),** ayant chacun le même diamètre primitif et un nombre de dents variant d'une unité et engrenant par engrenage planétaire **(j)** contenu dans une boîte de contraste **(k)** appelée boîte de contraste **(k).**

2. **RESERVE 2:** La barre alesante portable COMME REVENDIQUE DANS LA RESERVE 1 (voir fig. 1) **caractérisée par** une motorisation à une extrémité avec engrenage à vis sans fin - roue hélicoïdale **(i)** avec moteur modulant réversible électrique, pneumatique ou hydraulique.

3. **RESERVE 3:** La barre alesante portable COMME REVENDIQUE DANS LA RESERVE 1 (voir fig. 2) **caractérisée par** une barre tubulaire, soutenue par deux supports ayant un dispositif d'avancement indépendant qui est monté sur la tête de la barre alesante avec contraste de la boîte d'engrenages **(d)** contenant l'engrenage planétaire actionné par une barre de contraste **(e)** et **(f).**

4. **RESERVE 4:** La barre alesante portable COMME REVENDIQUE DANS LA RESERVE 1 (voir fig. 3) sans motorisation **caractérisée par** la présence d'une attache Morse-ISO, ou autre type d'attache, pour le raccord avec une machine-outil (foreuse à colonne, en drapeau, fraiseuse universelle ou à portail, aleseuse, traceur ou autres machines-outils).

5. **RESERVE 5:** La barre alesante portable COMME REVENDIQUE DANS LA RESERVE 4 (voir fig. 3) **caractérisée par** un dispositif équipé d'une série d'engrenages pour la transmission du mouvement de translation.

6. **RESERVE 6:** La barre alesante portable COMME REVENDIQUE DANS LA RESERVE 5 (voir fig. 3) **caractérisée par** une boîte de transfert **(a)** pour transférer le mouvement différentiel de l'extérieur à l'intérieur de la vis de base. La boîte de contraste est équipée d'une barre de contraste **(e)** et **(f).** Si la barre de contraste **(e)** et **(f)** est insérée dans l'engrenage, l'engrenage **(B)** qui est intégré au groupe friction, devient engrenage moteur, et, par l'intermédiaire de l'engrenage planétaire **(C),** transmet le mouvement à l'engrenage **(A).** A l'aide d'une greffe à tour, l'engrenage **(A)** est relié à l'engrenage **(D)** qui à son tour avec une chaîne d'engrenages transfert le mouvement à la vis de base située au centre de la barre au moyen d'un engrenage qui maintient inchangé le sens de rotation.

7. **RESERVE 7:** La barre alesante portable COMME REVENDIQUE DANS LA RESERVE 1 (voir fig.1) **caractérisée par** une friction de sécurité **(p)** e **(n),** située au-dessus de la boîte de contraste **(k)** qui se déclenche en cas de heurt ou de fin de course.

8. **RESERVE 8:** La barre alesante portable COMME REVENDIQUE DANS LES RESERVES 1, 4, 5, 6 (voir fig.1) **caractérisée par** un ruban d'acier harmonique **(z),** ou autre matériel équivalent, pour la protection du mouvement interne.

9. **RESERVE 9:** La barre alesante portable COMME REVENDIQUE DANS LES RESERVES 1, 4, 5, 6 (voir fig. 1), **caractérisée par** un bloc **(r)** avec un outil **(s)** que l'on peut arranger et bloquer en position, avec la possibilité de remplacer les outils **(s).**
